# EUROPÄISCHE PATENTSCHRIFT

(11) **EP 2 116 075 B1**
(45) Veröffentlichungstag und Bekanntmachung des Hinweises auf die Patenterteilung: **15.07.2015**
(21) Anmeldenummer: 08707291.4
(22) Anmeldetag: 25.01.2008
(51) Int. Cl.: H04L 9/32, H04W 12/06, H04W 88/02, G07F 7/08, H04L 29/06

(54) **SICHERHEITSMODUL**
SECURITY MODULE
MODULE DE SÉCURITÉ

(30) Priorität: 29.01.2007 DE 102007004337
(43) Veröffentlichungstag der Anmeldung: 11.11.2009
(73) Patentinhaber: Giesecke & Devrient GmbH, 81677 München (DE)
(72) Erfinder: SPITZ, Stephan, 81247 München (DE)
(74) Vertreter: Bornhäuser, Frank
(86) Internationale Anmeldenummer: PCT/EP2008/000582
(87) Internationale Veröffentlichungsnummer: WO 2008/092606

(56) Entgegenhaltungen:
- EP-A- 0 869 691
- WO-A-03/049364
- WO-A-2005/050960
- GB-A- 2 423 895

## Beschreibung

Die Erfindung betrifft ein Verfahren zum Übertragen von Daten zwischen einem Kommunikationsgerät und einem Server über ein Sicherheitsmodul in einem Telekommunikationsendgerät sowie eine derartiges Sicherheitsmodul, welches vorzugsweise als Mobilfunkkarte ausgestaltet ist.

Zahlreiche Geräte verfügen über Schnittstellen zum Empfangen und Senden von Daten, beispielsweise IrDA, NFC, Bluetooth oder dergleichen, und können so zu lokalen Netzen zusammengefügt werden. Solche Geräte sind dann aber nicht in der Lage, Daten ins Internet zu senden oder von einem Internet-Server Daten zu empfangen.

Es ist bekannt ein Gateway einzusetzen, um die Kommunikationsfähigkeit von Geräten zu erweitern. Dadurch wird es Geräten ermöglicht, mittels des ihnen zugehörigen Kommunikationsprotokolls, über welches diese eventuell in einem lokalen Netz mit anderen Geräten verbunden sind, über das Gateway mit weiteren Geräten zu kommunizieren, die sich in einem Kommunikationsnetz mit einem anderen Kommunikationsprotokoll befinden, ohne dass die Geräte oder deren Steuerung einer Veränderung unterzogen werden müssen.

Die EP 0 869 691 B1 offenbart ein Telekommunikationsendgerät im GSM-Mobilfunknetz mit einer SIM-Mobilfunkkarte. Mittels SIM-Appliction-Toolkit-Anwendungen, die auf der SIM-Mobilfunkkarte ausführbar sind, können Daten, die über eine Antenne des Telekommunikationsendgeräts über das GSM-Netz empfangen worden sind, über eine weitere Kommunikationsschnittstelle des Telekommunikationsendgeräts zu einem externen Gerät geleitet werden. GB 2 423 895 A schlägt vor, ein Mobilfunkgerät mit einem PC zu verbinden, um die komfortablere Nutzerschnittstelle des PCs verwenden zu können. Der User authentisiert sich mit seiner PIN gegenüber der SIM-Karte und das Mobilfunkgerät authentisiert sich mittels der SIM-Karte gegenüber dem Telekommunikationsnetz. Die persönlichen, geheimen Authentisierungsdaten des Users müssen also auf der SIM-Karte hinterlegt sein, damit die Authentisierung erfolgen kann.

Auch in WO 2005/050960 A1 wird die übliche benutzerbezogene Authentisierung verwendet. Für den Fall, dass der Nutzer nicht der Inhaber der SIM-Karte, sondern ein Dritter ist, wird hier das Einsetzen der SIM-Karte des Dritten vorgeschlagen.

In der WO 2003/049364 A ist ein Verfahren zum Einsatz eines Mobiltelefons im Zahlungsverkehr offenbart. Die EP 0 869 691 A gibt ein Verfahren zur Weiterleitung von GSM-Daten über ein Mobiltelefon wieder.

Es ist die Aufgabe der vorliegenden Erfindung, ein Sicherheitsmodul zur Erweiterung der Kommunikationsfähigkeit eines Geräts unter der Kontrolle des Sicherheitsmoduls vorzuschlagen.

Diese Aufgabe wird durch ein Verfahren und ein Sicherheitsmodul mit den Merkmalen der unabhängigen Ansprüche gelöst. Vorteilhafte Ausgestaltungen und Weiterbildungen sind in den davon abhängigen Ansprüchen angegeben.

Das erfindungsgemäße Sicherheitsmodul ist in der Regel eine reversibel in ein Mobilfunkendgerät einsetzbare Mobilfunkkarte. Alternativ könnte das Sicherheitsmodul aber auch als eine fest in ein Mobilfunkendgerät integrierte, separate Komponente ausgestaltet sein, welche insbesondere die Funktion einer Mobilfunkkarte übernimmt. Im Folgenden wird vereinfachend nur noch von einer Mobilfunkkarte gesprochen.

In dem erfindungsgemäßen Verfahren zum Übertragen von Daten zwischen einem Kommunikationsgerät und einem Server über eine von einer Mobilfunkkarte, die in einem Telekommunikationsendgerät integriert ist, eingerichtete Kommunikationsverbindung zwischen dem Telekommunikationsendgerät und dem Server empfängt die Mobilfunkkarte an den Server gerichtete Anfragedaten des Kommunikationsgeräts und ermöglicht oder bewirkt ein Weiterleiten der Anfragedaten über die Kommunikationsverbindung an den Server. Desgleichen empfängt die Mobilfunkkarte in Reaktion auf die Anfragedaten an das Kommunikationsgerät gerichtete Antwortdaten des Servers und ermöglicht oder bewirkt ein Weiterleiten der Antwortdaten an das Kommunikationsgerät zur Beantwortung der Anfrage.

Das Verfahren zeichnet sich dadurch aus, dass die Mobilfunkkarte prüft, ob ein Bereitstellungsnachweis vorliegt, der eine Bereitstellung der Kommunikationsverbindung für das Weiterleiten der Anfragedaten an den Server betrifft, der also dokumentiert, dass die Kommunikationsverbindung zwischen dem Telekommunikationsendgerät und dem Server für die Anfragedaten des Kommunikationsgeräts gegenwärtig zur Verfügung steht. Der Bereitstellungsnachweis macht also deutlich, dass das Kommunikationsgerät - zeitlich oder volumenmäßig begrenzt - über die von der Mobilfunkkarte eingerichtete Kommunikationsverbindung verfügen und die Mobilfunkkarte mit der Weiterleitung der Anfragedaten beauftragen kann. Ohne einen solchen Bereitstellungsnachweis ist die Datenkommunikation über die Kommunikationsverbindung für externe Kommunikationsgeräte nicht möglich, da die Kommunikationsverbindung üblicherweise nur exklusiv von der Mobilfunkkarte und auf deren ursächliche Veranlassung in Anspruch genommen werden kann.

Ein Weiterleiten der von dem Kommunikationsgerät empfangenen Anfragedaten wird von der Mobilfunkkarte demzufolge nur in dem Fall ermöglicht oder bewirkt, in dem ein solcher Bereitstellungsnachweis, vorzugsweise auf der Mobilfunkkarte, vorliegt.

Die Mobilfunkkarte agiert in dem Verfahren als unabhängiges Gateway zur Erweiterung der Kommunikationsfähigkeit des Kommunikationsgeräts, indem Anfragedaten von dem Kommunikationsgerät zu dem Server und Antwortdaten von dem Server zu dem Telekommunikationsendgerät weitergeleitet werden. Durch das Einrichten der Kommunikationsverbindung zwischen dem Telekommunikationsendgerät und dem Server stellt die Mobilfunkkarte die datenübertragungstechnischen Voraussetzungen einer Datenübertragung zwischen dem Kommunikationsgerät und dem Server her. Die Datenübertragung wird somit unter der Kontrolle der Mobilfunkkarte durchgeführt.

Die Bereitstellung der Kommunikationsverbindung für die tatsächliche Datenübertragung, also das Weiterleiten der Anfragedaten an den Server, die das Bereitstellen von Ressourcen betrifft, die für das Weiterleiten benötigt werden, wie beispielsweise Datenübertragungszeit oder -kapazität, ist von dem Einrichten der Kommunikationsverbindung zu unterscheiden und obliegt Dritten, beispielsweise dem Betreiber des Kommunikationsgeräts in Absprache mit dem Betreiber des Servers. Die Mobilfunkkarte prüft lediglich, ob ein Bereitstellungsnachweis vorliegt, und ermöglicht oder bewirkt ein Weiterleiten im positiven Fall.

Ein Bereitstellungsnachweis kann beispielsweise durch Übernahme der Kosten einer Datenübertragung über die Kommunikationsverbindung zwischen dem Telekommunikationsendgerät und dem Server erlangt werden und umfasst dann einen Nachweis einer solchen Kostenübernahme einer Datenübertragung durch das Kommunikationsgerät oder einen beliebigen Dritten. In diesem Fall prüft die Mobilfunkkarte, ob ein Nachweis für die Übernahme der Kosten vorliegt, die ein Weiterleiten der Anfragedaten zu dem Server, und wahlweise auch ein Weiterleiten der Antwortdaten des Servers an das Kommunikationsendgerät betreffen, also beispielsweise Übertragungs- oder Volumenkosten und/oder Kosten für die weitergeleiteten Antwortdaten, beispielsweise Software-Updates. Im positiven Fall leitet die Mobilfunkkarte die Daten weiter, da sämtliche Kosten das Weiterleiten betreffend nachprüfbar für Dritte abgerechnet werden.

Die erfindungsgemäße Mobilfunkkarte umfasst einen Speicher, mindestens eine Datenschnittstelle zu einem Telekommunikationsendgerät und eine auf einem Prozessor der Mobilfunkkarte ausführbare Steuerapplikation. Die Mobilfunkkarte ist eingerichtet, die Kommunikationsverbindung zu einem Server einzurichten, und die Steuerapplikation ist eingerichtet, über eine Datenschnittstelle empfangene Daten, also z.B. an einen Server gerichtete Anfragedaten eines Kommunikationsgeräts und an das Kommunikationsgerät gerichtete Antwortdaten des Servers in dem Speicher zu speichern. Desgleichen ist die Steuerapplikation eingerichtet, ein Weiterleiten von in dem Speicher gespeicherten Anfragedaten über die Kommunikationsverbindung zu dem Server und in dem Speicher gespeicherter Antwortdaten des Servers zu dem Kommunikationsgerät zu ermöglichen oder zu bewirken. Erfindungsgemäß ist die Steuerapplikation weiterhin eingerichtet, ein Vorliegen eines vorstehend beschriebenen Bereitstellungsnachweises zu prüfen und ein Weiterleiten der in dem Speicher gespeicherten Anfragedaten nur dann zu ermöglichen oder zu bewirken, wenn ein solcher Nachweis vorliegt.

Das Prüfen des Vorliegens eines Bereitstellungsnachweises kann erfolgen, indem geprüft wird, ob in dem Speicher der Mobilfunkkarte ein dem Kommunikationsgerät zuzuordnendes Zertifikat gespeichert ist, das die Kommunikationsadresse des Servers umfasst, mittels der dieser über die Kommunikationsverbindung angesprochen werden kann. Ein solches Zertifikat kann weitere Daten umfassen, beispielsweise erlaubte Übertragungsrichtungen, erlaubtes Datenvolumen, Zahlungsform und dergleichen. Das Zertifikat bestätigt verifizierbar, dass die Inanspruchnahme von Ressourcen bei der Datenübertragung über die Kommunikationsverbindung zwischen dem Kommunikationsgerät und dem Server nicht gegenüber der Mobilfunkkarte, sondern für einen Dritten abgerechnet wird. Ein Bereitstellungsnachweis dieser Art ist geeignet, pauschal für zahlreiche Anfragen des Kommunikationsgeräts bei einem bestimmen Server als Bereitstellungsnachweis zu dienen. In dem Speicher der Mobilfunkkarte kann z.B. eine Liste solcher Zertifikate zu einer Mehrzahl von Kommunikationsgeräten und für jedes dieser Kommunikationsgeräte zu einer Mehrzahl von Servern gespeichert sein. Auf diese Weise kann die Mobilfunkkarte für ein beliebiges in der Liste angegebenes Paar von Kommunikationsgerät und Server nach dem Prüfen des Vorliegens des Bereitstellungsnachweises als Gateway dienen.

Das Prüfen des Vorliegens eines Bereitstellungsnachweises kann weiterhin dadurch erfolgen, dass geprüft wird, ob in einer in dem Speicher der Mobilfunkkarte vorliegenden elektronischen Börse ein die Kommunikationsverbindung zu dem Server betreffender Bereitstellungseintrag vorliegt. Ein solcher Bereitstellungseintrag ist z.B. geeignet, für ein einzelnes Weiterleiten von Anfragedaten an den Server als Bereitstellungsnachweis benutzt zu werden. Dazu kann beispielsweise das Kommunikationsgerät und die Mobilfunkkarte mit einer elektronischen Börse ausgestattet sein. Vor oder beim Stellen der Anfrage an den Server über die Mobilfunkkarte kann dann das Kommunikationsgerät mittels einer elektronischen Transaktion einen der Weiterleitung der Anfragedaten und den erwarteten Antwortdaten entsprechenden Bereitstellungseintrag in die Börse der Mobilfunkkarte einfügen, welchen die Steuerapplikation der Mobilfunkkarte dann als Bereitstellungsnachweis prüfen kann.

Beim Prüfen des Vorliegens eines Bereitstellungsnachweises kann weiterhin geprüft werden, ob in dem Speicher der Mobilfunkkarte eine elektronische Quittung gespeichert ist, die eine Bereitstellung der Kommunikationsverbindung betrifft. Eine solche Quittung kann beispielsweise die Kostenübernahme für die Weiterleitung der Anfragedaten über die Kommunikationsverbindung zu dem Server bestätigen. Die elektronische Quittung kann dabei auf einem anderem Übertragungsweg, also nicht über die Mobilfunkkarte, erworben worden sein, beispielsweise mittels eines Micropayment-Vorgangs.

Vorzugsweise wird das Empfangen von Anfragedaten durch die Mobilfunkkarte durchgeführt, indem eine geräteseitige, die Kommunikation mit dem Kommunikationsgerät unterstützende Applikation Anfragedaten des Kommunikationsgeräts über eine geräteseitige, die Kommunikation mit dem Kommunikationsgerät unterstützende Kommunikationsschnittstelle eines Telekommunikationsendgeräts empfängt und diese Anfragedaten in einem Speicher der Mobilfunkkarte speichert. Genauso ist eine serverseitige, die Kommunikation mit dem Server unterstützende Applikation vorgesehen, die Antwortdaten des Servers über die Kommunikationsverbindung über eine serverseitige, die Kommunikation mit dem Server unterstützende Kommunikationsschnittstelle eines Telekommunikationsendgeräts empfängt und in einem Speicher der Mobilfunkkarte speichert. Beim Weiterleiten von Antwortdaten des Servers an das Kommunikationsgerät liest die geräteseitige Applikation in dem Speicher der Mobilfunkkarte gespeicherte Antwortdaten aus und leitet diese über die geräteseitige Kommunikationsschnittstelle des Telekommunikationsendgeräts an das Kommunikationsgerät weiter. Die serverseitige Applikation liest zum Weiterleiten der Anfragedaten an den Server im Speicher der Mobilfunkkarte gespeicherte Anfragedaten aus und leitet diese über die serverseitige Kommunikationsschnittstelle des Telekommunikationsendgeräts und über die Kommunikationsverbindung an den Server weiter.

Sowohl die geräteseitige Applikation als auch die serverseitige Applikation können unabhängig voneinander auf der Mobilfunkkarte oder dem Telekommunikationsendgerät installiert sein.

Wird die geräteseitige Applikation auf einem Prozessor eines Telekommunikationsendgeräts ausgeführt, so ermöglicht die Mobilfunkkarte ein Weiterleiten der Antwortdaten durch die geräteseitige Applikation, indem die Mobilfunkkarte der geräteseitigen Applikation Zugriff auf den Speicher der Mobilfunkkarte gewährt, um von dort entsprechend gespeicherte Antwortdaten auszulesen.

Ebenso ermöglicht die Mobilfunkkarte ein Weiterleiten der Anfragedaten durch die serverseitige Applikation, falls die serverseitige Applikation auf einem Prozessor eines Telekommunikationsendgeräts ausgeführt wird, indem die Mobilfunkkarte der serverseitigen Applikation Zugriff auf den Speicher der Mobilfunkkarte gewährt, um von dort entsprechend gespeicherte Anfragedaten auszulesen.

Die serverseitige und die geräteseitige Applikation können in einem entsprechend ausgestatteten Telekommunikationsendgerät beispielsweise jeweils als J2ME ("Java 2 Platform, Micro Edition") Midlet ausgebildet sein. Die Datenübertragung zwischen einer auf dem Telekommunikationsendgerät ausgeführten Applikation und der Mobilfunkkarte kann über eine Datenschnittstelle der Mobilfunkkarte mittels einer APDU-Schnittstelle ("Application Protocol Data Unit") erfolgen. Es sind auch Mobilfunkkarten bekannt, bei denen ein Teil eines FLASH-Speichers über das USB-, MMC- oder SD-Protokoll angesprochen werden kann.

Wird die geräteseitige Applikation hingegen auf einem Prozessor der Mobilfunkkarte ausgeführt, so bewirkt die Mobilfunkkarte ein Weiterleiten der Antwortdaten durch die geräteseitige Applikation, indem die Mobilfunkkarte die geräteseitige Applikation aktiviert.

Ebenso bewirkt die Mobilfunkkarte ein Weiterleiten der Anfragedaten durch die serverseitige Applikation, falls die serverseitige Applikation auf einem Prozessor der Mobilfunkkarte ausgeführt wird, indem die Mobilfunkkarte die serverseitige Applikation aktiviert.

Das Kommunikationsgerät kann Authentisierungsdaten an das die Mobilfunkkarte beinhaltende Telekommunikationsendgerät senden. Mit Hilfe solcher Authentisierungsdaten, beispielsweise einer elektronischen Signatur, kann der gesamte Datenübertragungsvorgang abgesichert werden. Die Authentisierungsdaten werden von der geräteseitigen Applikation empfangen und von dieser verifiziert oder ungeprüft in dem Speicher der Mobilfunkkarte gespeichert. Dann kann die serverseitige Applikation die in dem Speicher gespeicherten Authentisierungsdaten verifizieren oder aus dem Speicher auslesen und an den Server weiterleiten, der die Authentisierungsdaten schließlich verifiziert. Ebenso können die geräteseitige und/oder die serverseitige Applikation Authentisierungsdaten erzeugen, die von dem Server verifiziert werden, wie auch der Server sich standardmäßig gegenüber der serverseitigen Applikation authentisiert. Auf diese Weise kann eine sichere Datenübertragung zwischen allen am Verfahren beteiligten Instanzen gewährleistet werden. Die Datenübertragung zwischen der serverseitigen Applikation und dem Server kann zusätzlich verschlüsselt erfolgen, beispielsweise über SSL/TLS.

Die Mobilfunkkarte kann Anfragedaten und/oder Antwortdaten mittels eines eindeutig der Mobilfunkkarte zuzuordnenden Identifikationsdatums, beispielsweise der IMSI ("International Mobile Subscriber Identity"), und eines geheimen Schlüssels personalisieren. Dies kann beispielsweise durch eine elektronische Signatur oder einen MAC ("Message Authentification Code") geschehen. Die elektronische Signatur kann mittels einer asymmetrischen Verschlüsselung erzeugt und vom Empfänger einfach mit Hilfe eines öffentlichen Schlüssels verifiziert werden, wobei ein geheimer Schlüssel sicher auf der Mobilfunkkarte gespeichert ist. Der MAC, beispielsweise ein passwortbasiertes Hash-Verfahren wie HMAC, erfordert als symmetrisches Verfahren einen geheimen Schlüssel, der für Dritte unzugänglich in der Mobilfunkkarte und auch im Empfängersystem, beispielsweise bei einem Mobilfunkprovider, vorhanden sein muss. Auf diese Weise können die weitergeleiteten Daten eindeutig der Mobilfunkkarte zugeordnet werden.

Auch kann die Gateway-Funktionalität dadurch an die Mobilfunkkarte gebunden werden, unabhängig von dem Telekommunikationsendgerät, in welches diese integriert ist. In dem Fall, in dem die geräteseitige und/ oder die serverseitige Applikation auf einem Telekommunikationsendgerät ausgeführt werden, kann die Mobilfunkkarte bei einem Wechsel des Telekommunikationsendgeräts die Installation der entsprechenden Applikationen auf dem neuen Telekommunikationsendgeräts aktivieren.

Die geräteseitige Kommunikationsschnittstelle eines Telekommunikationsendgeräts kann eine USB-, IrDA, Bluetooth, NFC-Schnittstelle oder dergleichen sein. Der Server ist vorzugsweise ein Internetserver und die Kommunikationsverbindung zwischen dem Telekommunikationsendgerät und dem Server ist für gewöhnlich eine Internetverbindung. Sofern die serverseitige Applikation auf einem Prozessor des Telekommunikationsendgeräts ausgeführt wird, wird die Kommunikationsverbindung über eine Mobilfunkschnittstelle des Telekommunikationsendgeräts über GSM, UMTS, WiFi, WLAN oder dergleichen hergestellt. Bei einer auf der Mobilfunkkarte ausführbaren serverseitigen Applikation kann es vorgesehen sein, dass die Mobilfunkkarte mittels der serverseitigen Applikation direkt mit dem Internet verbunden ist. Hierzu muss die Mobilfunkkarte als Internetchipkarte ausgebildet sein, die eine eigenständige Verbindung ins Internet aufbauen kann, indem sie beispielsweise selbst über einen eigenen TCP/IP-Protokollstapel verfügt. Alternativ kann die Mobilfunkkarte indirekt über BIP ("Bearer Independent Protocol") und ein Telekommunikationsendgerät mit dem Internet verbunden sein.

Nachfolgend wird die Erfindung anhand der begleitenden Zeichnungen beispielhaft beschrieben. Darin zeigen:
- Figur 1: die an einer bevorzugten Ausführungsform des erfindungsgemäßen Verfahrens beteiligten Komponenten; und
- Figur 2: die Schritte der bevorzugten Ausführungsform des erfindungsgemäßen Verfahrens.

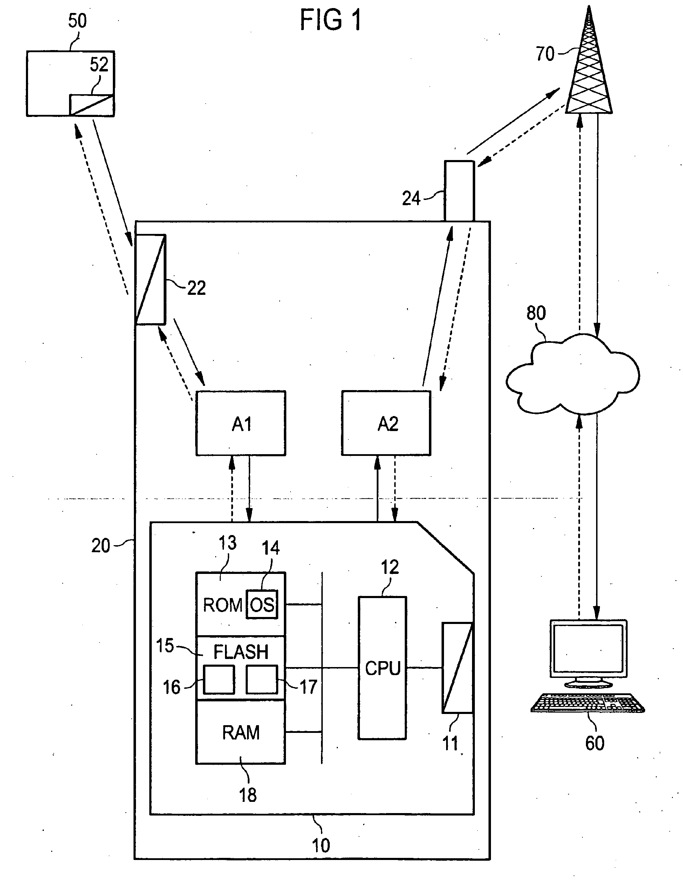

Mit Bezug auf Figur 1 sendet und empfängt ein Kommunikationsgerät 50 Daten über eine Kommunikationsschnittstelle 52. Das Kommunikationsgerät 50 kann über ein lokales Netz mit anderen Geräten vernetzt sein, die ebenfalls über das von der Kommunikationsschnittstelle 52 unterstütze Protokoll kommunizieren können, jedoch ist das Kommunikationsgerät 50 von sich aus nicht in der Lage, Daten ins Internet zu übertragen oder von einem Internetserver 60 Daten zu empfangen. Die Kommunikationsschnittstelle 52 kann beispielsweise eine USB-, Bluetooth-, IrDA-, NFC-Schnittstelle oder dergleichen sein.

Ein Telekommunikationsendgerät 20 umfasst eine geräteseitige Kommunikationsschnittstelle 22, welche kompatibel ist zu der Kommunikationsschnittstelle 52 des Kommunikationsgeräts 50. Auf diese Weise ist ein Datenaustausch zwischen dem Telekommunikationsendgerät 20 und dem Kommunikationsgerät 50 möglich. Das Telekommunikationsendgerät 20 umfasst weiterhin eine serverseitige Kommunikationsschnittstelle 24, über welche eine Datenübertragung, wie in Figur 1 gezeigt über ein Mobilfunknetz 70, über eine als Internetverbindung 80 ausgebildete Kommunikationsverbindung 80 zu einem Internetserver 60 ermöglicht wird. Dabei kann die Internetverbindung 80 mit Hilfe des Telekommunikationsendgeräts 20 über GSM, UMTS, WiFi, WLAN oder dergleichen hergestellt werden. Es ist auch möglich, mittels einer nachstehend genauer beschriebenen, in dem Telekommunikationsendgerät 20 integrierten Mobilfunkkarte 10 eine direkte Internetverbindung 80 der Mobilfunkkarte 10 mit Server 60 einzurichten.

Eine Mobilfunkkarte 10, beispielsweise eine SIM- oder USIM-Mobilfunkkarte, ist in das Telekommunikationsendgerät 20 integriert. Alternativ kann ein fest im Telekommunikationsendgerät 20 installiertes, separates Sicherheitsmodul, beispielsweise ein TPM oder eine NFC-Einheit, die Rolle der Mobilfunkkarte 10 übernehmen. Die Mobilfunkkarte 10 umfasst eine Datenschnittstelle 11 zur Kommunikation mit dem Telekommunikationsendgerät 20. Über die Datenschnittstelle 11 können Daten und Kommandos zwischen dem Telekommunikationsendgerät 20 und der Mobilfunkkarte 10 übertragen werden. Dies kann mittels der APDU-Schnittstelle, beispielsweise über das T=0 oder T=1 Protokoll oder dergleichen, erfolgen.

Die Mobilfunkkarte 10 umfasst weiterhin einen Prozessor 12 (CPU), und damit verbunden einen nichtflüchtigen ROM- oder Flash-Speicher 13, in dem der Kern eines die Mobilfunkkarte 10 steuernden Betriebssystems 14 (OS) gespeichert sein kann, einen als Massenspeicher benutzbaren, nichtflüchtigen, wiederbeschreibbaren FLASH-Speicher 15, der Speicherbereiche 16 und 17 umfasst, in denen beispielsweise einerseits auf der Mobilfunkkarte ausführbare Applikationen (16) und andererseits von den Applikationen erzeugte und in den Datenträger eingebrachte Daten (17) gespeichert werden können, sowie einen flüchtigen, schnellen Arbeitsspeicher 18 (RAM). Auch ein EEPROM-Speicher oder dergleichen kann als Speicher 15 eingesetzt werden. Der Zugriff auf die Speicher 13,15 und 18, sowie auf die Datenschnittstelle 11 wird durch das Betriebssystem 14 gesteuert.

Es ist möglich, dass ein Teil des Speicherbereichs 17 des Speichers 15 für Applikationen, die auf einem Prozessor des Telekommunikationsendgeräts 20, ausgeführt werden, als USB-, MMC, oder SD-Massenspeicher ansprechbar ist, wodurch die Mobilfunkkarte 10 über weitere Datenschnittstellen zu dem Telekommunikationsendgerät 20 verfügt.

Die Mobilfunkkarte 10 kann als Internetchipkarte ausgebildet sein. Dadurch kann die Mobilfunkkarte 10, die in diesem Fall über einen eigenen TCP/IP-Protokollstapel verfügt, direkt über das IP-Protokoll als eigenes Netzwerkelement angesprochen werden und direkt eine Internetverbindung 80 mit dem Server 60 einrichten. Es ist auch möglich, dass die Mobilfunkkarte 10 die Internetverbindung 80 mittels des BIP ("Bearer Independent Protocol") über das Telekommunikationsendgeräts 20 zu dem Server 60 einrichtet.

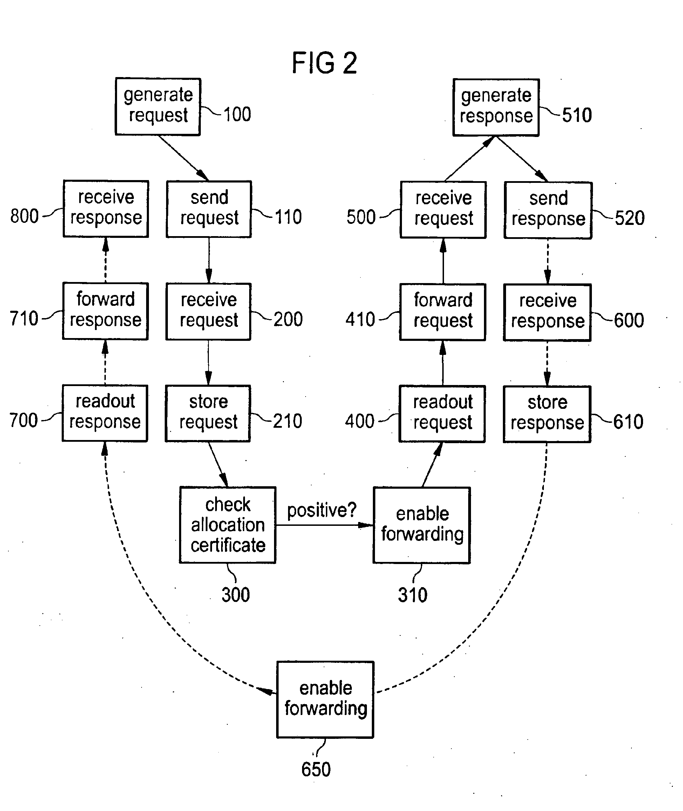

In dem Speicherbereich 16 ist eine Steuerapplikation gespeichert. Diese Steuerapplikation steuert in Zusammenarbeit mit dem Betriebsystem 14 beispielsweise den Zugriff der nachstehend beschriebenen geräteseitigen und serverseitigen Applikation A1 und A2 auf den Speicher 15. Deshalb kann die Steuerapplikation auch ein Teil des Betriebssystems sein. Des Weiteren ist die Steuerapplikation eingerichtet, ein Vorliegen eines nachstehend mit Bezug auf Figur 2 beschriebenen Bereitstellungsnachweises im Speicher 15 zu prüfen und gegebenenfalls abhängig davon die Applikationen A1 oder A2 zu aktivieren oder diesen begrenzten Speicherzugriff auf den Speicher 15 zu gewähren.

Eine geräteseitige Applikation A1 empfängt von dem Kommunikationsgerät 50 an das Telekommunikationsendgerät 20 gesendete Daten über die geräteseitige Kommunikationsschnittstelle 22 und speichert diese Daten im Speicherbereich 17 des Speichers 15 der Mobilfunkkarte 10. Ebenso ist die geräteseitige Applikation A1 eingerichtet, bei ihr von der Steuerapplikation gewährtem Zugriff Daten aus dem Speicher 15 der Mobilfunkkarte 10 auszulesen und über die geräteseitige Kommunikationsschnittstelle 22 des Telekommunikationsendgeräts 20 an das Kommunikationsgerät 50 weiterzuleiten. Die geräteseitige Applikation A1 kann beispielsweise als J2ME Midlet ausgebildet sein.

Die geräteseitige Applikation A1 wird auf einem Prozessor des Telekommunikationsendgeräts 20 ausgeführt. Es ist auch möglich, dass die geräteseitige Applikation A1 auf der Mobilfunkkarte 10 installiert ist und auf dem Prozessor 12 der Mobilfunkkarte 10 ausgeführt wird.

Eine serverseitige Applikation A2 ist eingerichtet, bei ihr von der Steuerapplikation gewährtem Zugriffsrecht Daten aus dem Speicher 15 der Mobilfunkkarte 10 auszulesen und über die serverseitige Kommunikationsschnittstelle 24 über die Kommunikationsverbindung 80 zu dem Server 60 weiterzuleiten. Ebenso ist die Applikation A2 geeignet, über die Kommunikationsverbindung 80 von dem Server 60 empfangene Daten in dem Speicher 15 der Mobilfunkkarte 10 zu speichern.

Die serverseitige Applikation A2 kann auf einem Prozessor des Telekommunikationsendgeräts 20 ausgeführt werden, beispielsweise als J2ME Midlet. In diesem Fall werden die aus dem Speicher 15 ausgelesenen Daten über eine als Mobilfunkschnittstelle ausgebildete serverseitige Kommunikationsschnittstelle 24 über einen Mobilfunkprovider 70 über eine Internetverbindung 80 an den Server 60 weitergeleitet.

Die serverseitige Applikation A2 kann auch, beispielsweise wenn die Mobilfunkkarte 10 wie vorstehend beschrieben als Internetchipkarte ausgebildet ist, auf dieser installiert sein und auf dem Prozessor 12 der Mobilfunkkarte 10 ausgeführt werden. In diesem Fall wird die Kommunikationsverbindung 80 zwischen der Mobilfunkkarte 10 und der Server 60 mittels der serverseitigen Applikation A2 direkt und nicht über den Mobilfunkprovider 70 eingerichtet.

Mit Bezug auf Figur 2 werden in Schritt 100 durch das Kommunikationsgerät 50 für den Server 60 bestimmte Anfragedaten erzeugt, die eine Kommunikation mit dem Server 60 beginnen oder fortsetzen. Diese Anfragedaten werden zu diesem Zweck über die Mobilfunkkarte 10 und die Kommunikationsverbindung 80 zwischen dem Telekommunikationsendgerät 20, in welches die Mobilfunkkarte 10 integriert ist, und dem Server 60 an den Server 60 gesendet ("generate request"). Die Anfragedaten sind beispielsweise geeignet, bei dem Server 60 von dem Kommunikationsgerät 50 benötigte Daten, beispielsweise ein Software-Update, anzufordern.

In Schritt 110 werden die Anfragedaten von dem Kommunikationsgerät 50 über die Kommunikationsschnittstelle 52 an das Telekommunikationsendgerät 20 gesendet ("send request").

In Schritt 200 werden die Anfragedaten von der geräteseitigen Applikation A1 über die geräteseitige Kommunikationsschnittstelle 22 des Telekommunikationsendgeräts 20 empfangen ("receive request") und in Schritt 210 in dem Speicherbereich 17 des Speichers 15 gespeichert ("store request"). Die Anfragedaten können Authentisierungsdaten des Kommunikationsgeräts 50 umfassen, beispielsweise eine digitale Signatur, mit Hilfe derer sich das Kommunikationsgerät 50 authentisiert. Eine Verifikation dieser Authentisierungsdaten kann durch die geräteseitige Applikation A1 oder, später im Verlauf des Verfahrens, durch die serverseitige Applikation A2 nach einem Auslesen der Anfragedaten aus dem Speicherbereich 17 oder erst durch den Server 60 nach einem Weiterleiten der Anfragedaten durch die Applikation A2 erfolgen, wie nachstehend mit Bezug auf die Schritte 400 und 410 beschrieben.

In Schritt 300 prüft die auf der Mobilfunkkarte ausgeführte Steuerapplikation, ob ein Bereitstellungsnachweis vorliegt, der eine Bereitstellung der Kommunikationsverbindung 80 für das Weiterleiten der Anfragedaten an den Server 60 betrifft ("check allocation certificate"). Die separate Bereitstellung der Kommunikationsverbindung 80 ist bei diesem Verfahren notwendig, da die Kommunikationsverbindung 80 von der Mobilfunkkarte 10 eingerichtet wird und ausschließlich für deren Zwecke vorgesehen ist. Die Kommunikationsverbindung 80 muss demzufolge zur Nutzung für die Zwecke des Kommunikationsgeräts 50 von diesem oder einem Dritten bereitgestellt werden.

Bereitstellung der Kommunikationsverbindung 80 bedeutet also das Bereitstellen der für die durchzuführende Datenübertragung benötigten Ressourcen, wie beispielsweise Datenübertragungszeit und -kapazität, nachdem die Kommunikationsverbindung an sich durch die Mobilfunkkarte 10 bereits zu Beginn des Verfahrens eingerichtet worden ist. Beispielsweise kann ein Bereitstellungsnachweis dadurch erbracht werden, dass belegt wird, dass Kosten eines Weiterleiten der Anfragedaten über die Kommunikationsverbindung 80 an den Server 60 bezahlt werden, wodurch die benötigen Ressourcen, die in der in Figur 1 beschriebenen bevorzugten Ausführungsform der Mobilfunkprovider 70 zur Verfügung stellt, als bereitgestellt betrachtet werden können.

Beim Prüfen des Vorliegens des Bereitstellungsnachweises in Schritt 300 kann beispielsweise geprüft werden, ob in dem Speicher 15 der Mobilfunkkarte 10 ein dem Kommunikationsgerät 50 zuzuordnendes Zertifikat des Servers 60 gespeichert ist. Das Zertifikat ist in der Regel kein herkömmliches Zertifikat, also beispielsweise für den Schlüssel des Servers, sondern eine digitale Unterschrift für bestimmte Datenelemente, wie insbesondere die Kommunikationsadresse des Servers 60. Das Zertifikat kann daneben andere Daten, wie beispielsweise eine erlaubte Übertragungsrichtung, ein erlaubtes Datenvolumen, eine Zahlungsart und dergleichen, umfassen. Ein solches Zertifikat ist als Bereitstellungsnachweis geeignet, verifizierbar zu bestätigen, dass Kosten, die für eine Weiterleitung von Anfragedaten von dem Kommunikationsgerät 50 über die Kommunikationsverbindung 80 zu dem Server 60 entstehen, für in dem Zertifikat angegebene Dritte abgerechnet und von diesen beglichen werden.

Es kann vorgesehen sein, dass die Mobilfunkkarte 10 die Anfragedaten zusammen mit dem Zertifikat digital signiert. Dadurch ist es beispielsweise für den Mobilfunkprovider 70, über welchen die Anfragedaten wie nachstehend beschrieben über die Kommunikationsverbindung 80 zu dem Server 60 weitergeleitet werden, ersichtlich, dass die Datenübertragung für Dritte und nicht für den Benutzer der Mobilfunkkarte 10 abgerechnet wird. Der Mobilfunkprovider 70 kann die Datenübertragung zu dem Server 60 unterbinden, falls die Serveradresse des Servers 60 nicht mit der in dem Zertifikat angegebenen übereinstimmt oder der Mobilfunkprovider kann dann diese Datenübertragung zu dem Server 60 für den in dem Zertifikat angegebenen Dritten abrechnen. Auf diese Weise kann zusätzlich sichergestellt werden, dass die Anfragedaten nicht von der geräteseitigen Kommunikationsschnittstelle 22 direkt zu der serverseitigen Kommunikationsschnittstelle 24 unter Umgehung der Mobilfunkkarte 10 weitergeleitet werden können.

Die Mobilfunkkarte 10 kann in dem Speicher 15 eine Liste ähnlicher Zertifikate gespeichert halten, die für beliebige Paare von Kommunikationsgerät und Server einen solchen Bereitstellungsnachweis repräsentieren. Ein Bereitstellungsnachweis in Form eines solchen Zertifikats kann dazu dienen, beispielsweise die Kostenübernahme für sämtliche Weiterleitungen von Anfragedaten von dem Kommunikationsgerät 50 zu den Server 60 über die Kommunikationsverbindung 80 pauschal für einen angegebenen Zeitraum, bis zu einem vorgegebenen Datenvolumen, bis zu einer vorgegebenen Anzahl von Anfragen oder dergleichen zu erbringen.

Alternativ können die Mobilfunkkarte 10 und das Kommunikationsgerät 50 jeweils eine elektronische Börse umfassen. Das Kommunikationsgerät 50 kann durch eine Transaktion einen Eintrag in der Börse der Mobilfunkkarte bewirken, der dem Kommunikationsgerät zuzuordnen ist und einer Leistung entspricht, die den Kosten für ein Weiterleiten der Anfragedaten über die Kommunikationsverbindung 80 zu dem Server 60 entspricht. Der Eintrag kann einem Geldbetrag entsprechen. Auch eine Bezahlung mittels Bonuspunkten, elektronischen Losen oder einer Minimaldienstleistungen eines Dritten, wie beispielsweise die Übertragung oder Bereitstellung eines Klingeltons oder dergleichen, ist möglich. Beim Prüfen des Vorliegens des Bereitstellungsnachweises wird dann in der im Speicher 15 der Mobilfunkkarte 10 gespeicherten elektronischen Börse nach einem entsprechenden Eintrag gesucht. Diese Form des Bereitstellungsnachweises eignet sich besonders zum Begleichen der Kosten einmaliger oder sporadischer Anfragen.

Als Bereitstellungsnachweis kann weiterhin eine elektronische Quittung dienen, die nachweist, dass ein Dritter die Kosten für ein Weiterleiten der Anfragedaten des Kommunikationsgeräts 50 über die Kommunikationsverbindung 80 zu dem Server 60 bezahlt hat. Eine Quittung kann beispielsweise die Bezahlung der anfallenden Kosten über einen anderen Weg, also nicht über die Mobilfunkkarte 10, belegen, beispielsweise mittels eines Mircopayment-Verfahrens oder dergleichen. Das Prüfen des Vorliegens eines Bereitstellungsnachweises sucht also im Speicher 15 der Mobilfunkkarte 10 nach einer entsprechenden elektronischen Quittung.

Die Mobilfunkkarte 10 kann die Anfragedaten vor deren Weiterleiten mittels eines ihr eindeutig zuzuordnenden Identifikationsdatums, beispielsweise der IMSI, und eines geheimen Schlüssels personalisieren. Dazu kann eine digitale Signatur im Verbindung mit einem asymmetrischen Verschlüsselungsverfahren benutzt werden. Der benötigte geheime Schlüssel ist sicher in der Mobilfunkkarte 10 gespeichert. Mit Hilfe eines öffentliche Schlüssels können die so personalisierten Anfragedaten einfach einem Absender zugeordnet werden. Auch ein MAC ("Message Authetifikation Code"), beispielsweise ein Hash-Verfahren unter Benutzung einer symmetrischen Verschlüsselung, wie z.B. HMAC, kann demselben Zweck dienen. In diesem Fall muss der geheime Schlüssel, der sicher in der Mobilfunkkarte 10 gespeichert ist, auch in dem empfangenden System, beispielsweise bei dem Mobilfunkprovider 70, bekannt sein, um eine Authentisierung der personalisierten Anfragedaten durchführen zu können.

Verläuft das Prüfen des Vorliegens des Bereitstellungsnachweises positive ("positive ?"), d.h. es liegt ein gültiger, dem Kommunikationsgerät 50, den Anfragedaten und dem Server 60 zuzuordnender Bereitstellungsnachweis für die Kommunikationsverbindung 80 vor, so ermöglicht oder bewirkt die Steuerapplikation in Schritt 310 ein Weiterleiten der Anfragedaten über die Kommunikationverbindung 80 zu dem Server 60 ("enable forwarding").

Ein Ermöglichen des Weiterleitens kann beispielsweise darin bestehen, der serverseitigen Applikation A2, die auf einen Prozessor des Telekommunikationsendgeräts 20 ausgeführt wird, in Schritt 400 Zugriff auf die in Schritt 210 in dem Speicher 15 gespeicherten Anfragedaten zu gewähren. Die serverseitige Applikation liest dann die Anfragedaten in Schritt 400 aus dem Speicher 15 aus ("readout request") und leitet diese im Schritt 410 über die serverseitige Kommunikationsschnittstelle 24 über die Kommunikationsverbindung 80 zu dem Server 60 weiter ("forward request").

Ein Bewirken des Weiterleitens kann im Fall einer serverseitigen Applikation A2, die auf dem Prozessor 12 der Mobilfunkkarte 10 ausgeführt wird, beispielsweise bedeuten, dass die Steuerapplikation die Applikation A2 mit entsprechenden Zugriffsrechten auf den Speicher 15 ausstattet und aktiviert, wobei dann die Applikation A2, wie vorstehend mit Bezug auf Schritt 400 und 410 beschrieben, fort fährt.

Es kann vorgesehen sein, dass sich die serverseitige Applikation A2 gegenüber dem Server 60 authentisiert, wie auch der Server 60 sich gegenüber der Applikation A2 authentisieren kann.

Die Übertragung der Anfragedaten von dem Telekommunikationsendgerät 20 über die Kommunikationsverbindung 80 zu dem Server 60, wie auch die nachstehend beschriebene Datenübertragung in der umgekehrten Richtung, kann verschlüsselt erfolgen, beispielsweise mittels SSL/TLS.

Die serverseitige Kommunikationsschnittstelle 24 des Telekommunikationsendgeräts 20 kann eingerichtet sein, die Anfragedaten zu dem Server 60 über den Mobilfunkprovider 70 nur "entschlüsselt" zu senden, sodass sinnvolle und interpretierbare Daten bei dem Server 60 nur dann ankommen, wenn die Anfragedaten zuvor von der Mobilfunkkarte 10 entsprechend "verschlüsselt" werden. Diese Vorgehensweise stellt zusätzlich sicher, dass die Anfragedaten nicht von der geräteseitigen Kommunikationsschnittstelle 22 des Telekommunikationsendgeräts 20 direkt zur serverseitigen Kommunikationsschnittstelle 24 unter Umgehung der Mobilfunkkarte 10 weitergeleitet werden können.

Die weitergeleiteten Anfragedaten werden in Schritt 500 von dem Server 60 empfangen ("receive request"). Im Server 60 werden in Schritt 510 entsprechende Antwortdaten an das Kommunikationsgerät 50 erzeugt ("generate response"), beispielsweise ein angefordertes Software-Update bereitgestellt, und in Schritt 520 über die Kommunikationsverbindung 80 an die Mobilfunkkarte 10 gesendet ("send response"). In den Antwortdaten sind Nutzdaten nur optional enthalten. Die Antwortdaten können beispielsweise nur aus einer einfachen Bestätigung "Acknowledge" für den Empfang der Anfragedaten bestehen.

Die Mobilfunkkarte 10 empfängt die von dem Server 60 gesendeten Antwortdaten, indem die serverseitige Applikation A2 in Schritt 600 die Antwortdaten über die serverseitige Kommunikationsschnittstelle 24 des Telekommunikationsendgeräts 20 oder direkt über die Kommunikationsverbindung 80 empfängt ("receive response") und in Schritt 610 in dem Speicher 15 der Mobilfunkkarte 10 speichert ("store response")

In Schritt 650 ermöglicht oder bewirkt die Steuerapplikation auf der Mobilfunkkarte 10 - in einer analog zu der mit Bezug auf Schritt 310 beschriebenen Weise - ein Weiterleiten der Antwortdaten über die geräteseitige Kommunikationsschnittstelle 22 zu dem Kommunikationsgerät 50 ("enable forwarding").

In Schritt 700 werden die gespeicherten Antwortdaten von der geräteseitigen Applikation A1, welcher von der Steuerapplikation in Schritt 650 Zugriff auf den Speicher 15 gewährt worden ist, aus diesem ausgelesen ("readout response") und in Schritt 710 an über die geräteseitige Kommunikationsschnittstelle 22 des Telekommunikationsendgeräts 20 an das Kommunikationsgerät 50 weitergeleitet ("forward response"), von welchem diese schließlich in Schritt 800 empfangen werden ("receive response").

Es kann vorgesehen sein, dass vor dem Ermöglichen oder Bewirken des Weiterleitens der Antwortdaten in Schritt 650 durch die Steuerapplikation nochmals das Vorliegen eines Bereitstellungsnachweises geprüft wird, da der Bereitstellungsnachweis auch eine Komponente enthalten kann, die ein Weiterleiten der Antwortdaten zu dem Kommunikationsgerät 50 betreffen, da beispielsweise durch das Senden der Antwortdaten durch den Server 60 über die Kommunikationsverbindung 80 oder beim Erzeugen der Antwortdaten im Server 60 selbst Kosten entstehen können, deren Übernahme durch einen solchen Bereitstellungsnachweis erneut nachgewiesen werden muss.

Weiterhin kann die Mobilfunkkarte 10 einen eigenen Internet-Server umfassen, der durch das Betriebssystem 14 implementiert ist. Der Internet-Server der Mobilfunkkarte 10 stellt auf der Mobilfunkkarte gespeicherte Daten für eine Anfrage (http-Request) durch einen Client bereit. Die vom Kommunikationsgerät 50 empfangenen Daten werden zunächst auf der Mobilfunkkarte 10 gespeichert. Auf Anfrage von einer Rechnereinheit 60 im Hintergrundsystem werden die gespeicherten Daten versendet. In diesem Fall muss dieser Client im Hintergrundsystem über anstehende Daten auf der Mobilfunkkarte 10 explizit informiert werden. Die Information, dass Daten auf der Mobilfunkkarte 10 abrufbar sind, kann als Hilfsinformation übertragen werden durch ein Anrufen einer bestimmten Telefonnummer oder ein Versenden einer Kurznachricht, welches jeweils vorzugsweise von der Mobilfunkkarte 10 selbst durchgeführt wird. Die angerufene Instanz erkennt die Mobilfunkkarte 10 und kann diese für ein Abrufen der Daten kontaktieren. Als optionalen Bestandteil enthält die Hilfsinformation die Internetadresse des Servers auf der Mobilfunkkarte 10.

In beiden Fällen muss der Server auf der Mobilfunkkarte für das Hintergrundsystem erreichbar werden. Das Mobiltesefon 20 wird als Gateway in das Netzwerk 80 für die Karte 10 eingerichtet werden. Das kann die Mobilfunkkarte 10 zum Beispiel mit Hilfe der Kommandos OPEN CHANNEL des SIM Applikation Toolkits (GSM 11.14 Standard) erreichen. Nachdem ein Verbindungsaufbau in das Netzwerk 80 initiiert wurde, müssen die anstehenden Daten vom Server der Mobilfunkkarte 10 abgeholt werden. Wurden bereitgestellte Daten im Speicher 15 nicht über eine Benutzerinteraktion signalisiert, kann jetzt die Mobilfunkkarte 10 dem Hintergrundsystem 60 den Wunsch zur Datenübermittlung über das SIM Applikation Toolkit Kommando SEND DATA signalisieren. Anschließend agiert das Hintergrundsystem 60 als Client, der am Server der Mobilfunkkarte 10 Daten abfragt. Nach vollständiger Datenübertragung baut die Mobilfunkkarte zum Beispiel mit Hilfe des Kommandos CLOSE CHANNEL des SIM Applikation Toolkits die Verbindung in das Netzwerk 80 wieder ab.

## Patentansprüche

1. Verfahren zum Übertragen von Daten zwischen einem Gerät (50) und einer Rechnereinheit (60) über ein Datennetz mit Hilfe eines Telekommunikationsendgerätes (20) eines Benutzers, welches ein Sicherheitsmodul (10) umfasst und über das Datennetz eine Verbindung zu der Rechnereinheit (60) bereitstellen kann, mit den folgenden Schritten in dem Telekommunikationsendgerät (20):
- Empfangen von an die Rechnereinheit (60) gerichteten Daten des Geräts (50) in dem Telekommunikationsendgerät (20);
- Ermöglichen (310) eines Weiterleitens der empfangenen Daten durch das Sicherheitsmodul (10) über eine bereitgestellte Verbindung (80) zwischen dem Telekommunikationsendgerät (20) und der Rechnereinheit (60); wobei
- das Sicherheitsmodul (10) prüft (300), ob eine Information vorliegt und
- der Schritt des Ermöglichens (310) des Weiterleitens der von dem Gerät (50) empfangenen Daten an die Rechnereinheit (60), ausgeführt wird, falls die Information vorliegt
**dadurch gekennzeichnet, dass**
die Information ein Bereitstellungsnachweis ist, der eine Bereitstellung der Kommunikationsverbindung (80) für das Weiterleiten der Daten an die Rechnereinheit (60) betrifft und der Bereitstellungsnachweis durch Übernahme von Kosten durch das Gerät (50) oder einen beliebigen Dritten, die Weiterleitung der Daten über die Kommunikationsverbindung (80) an die Rechnereinheit (60) betreffend, erlangt wird.

2. Verfahren nach Anspruch 1, **dadurch gekennzeichnet, dass** die Rechnereinheit (60) ein Server ist und sich der Benutzer für die bereitgestellte Kommunikationsverbindung (80) mit Hilfe seines Sicherheitsmoduls identifiziert.

3. Verfahren nach Anspruch 2, **dadurch gekennzeichnet, dass** beim Prüfen (300) des Vorliegens eines Bereitstellungsnachweises geprüft wird, ob in einem Speicher (15) des Sicherheitsmodul (10) eine digitale Unterschrift für eine Kommunikationsadresse des Servers (60) vorliegt.

4. Verfahren nach Anspruch 3, **dadurch gekennzeichnet, dass** beim Prüfen (300) des Vorliegens eines Bereitstellungsnachweises die digitale Unterschrift und die Übereinstimmung der signierten Kommunikationsadresse des Servers (60) mit einer Zieladresse der weiter zu leitenden Daten geprüft wird.

5. Verfahren nach einem der Ansprüche 3 oder 4, **dadurch gekennzeichnet, dass** der Bereitstellungsnachweis von dem Gerät (50) an das Telekommunikationsendgerät (20) übertragen wird.

6. Verfahren nach Anspruch 2, **dadurch gekennzeichnet, dass** beim Prüfen (300) des Vorliegens eines Bereitstellungsnachweises geprüft wird, ob in einer in einem Speicher (15) des Sicherheitsmoduls (10) liegenden elektronischen Börse ein die Kommunikationsverbindung (80) zu dem Server (60) betreffender Bereitstellungseintrag vorliegt, der dem Gerät (50) zuzuordnen ist.

7. Verfahren nach Anspruch 2, **dadurch gekennzeichnet, dass** beim Prüfen (300) des Vorliegens eines Bereitstellungsnachweises geprüft wird, ob in einem Speicher (15) des Sicherheitsmoduls (10) eine die Kommunikationsverbindung (80) zu dem Server (60) betreffende elektronische Quittung vorliegt.

8. Verfahren nach einem der Ansprüche 1 bis 7, **dadurch gekennzeichnet, dass** die Kosten für die Weiterleitung der Daten über die Kommunikationsverbindung (80) an die Rechnereinheit (60)Telekommunikationskosten betreffen.

9. Verfahren nach einem der Ansprüche 1 bis 8, **dadurch gekennzeichnet, dass** das Sicherheitsmodul unterschiedliche Bereitstellungsnachweistypen überprüft.

10. Verfahren nach einem der Ansprüche 1 bis 9, **dadurch gekennzeichnet, dass** der Bereitstellungsnachweis der Rechnereinheit (60) zugeordnet ist.

11. Verfahren nach einem der Ansprüche 1 bis 10, **dadurch gekennzeichnet, dass** der Bereitstellungsnachweis eine Rufnummer für ein Telekommunikationsnetzwerk umfasst, wobei die Rufnummer eine für den Benutzer kostenfreie Datenübertragung über das Telekommunikationsnetzwerk in das Datennetz, zumindest zu der Rechnereinheit (60), ermöglicht.

12. Verfahren nach Anspruch 11, **dadurch gekennzeichnet, dass** die Rufnummer eine für den Benutzer kostenfreie Telekommunikationsübertragung über das Telekommunikationsnetzwerk ermöglicht und die Rechnereinheit (60) in Antwort auf die Telekommunikationsübertragung die Kommunikationsverbindung (80) über das Datennetz für das Weiterleiten der Daten aufbaut.

13. Verfahren nach einem der Ansprüche 1 bis 12, **dadurch gekennzeichnet, dass** das Sicherheitsmodul die empfangenen Daten speichert und zum Abruf durch die Rechnereinheit (60) als Client von einem auf dem Sicherheitsmodul eingerichteten Server bereitstellt.

14. Verfahren nach einem der Ansprüche 1 bis 13, **dadurch gekennzeichnet, dass** beim Empfangen von Anfragedaten des Geräts (50) eine geräteseitige Applikation (A1) die Anfragedaten über eine geräteseitige Kommunikationsschnittstelle (22) des Telekommunikationsendgeräts (20) empfängt und in einem Speicher (15) des Sicherheitsmoduls (10) speichert, und beim Weiterleiten von Antwortdaten an das Gerät (50) die geräteseitige Applikation (A1) die Antwortdaten des Servers (60) aus dem Speicher (15) des Sicherheitsmoduls (10) ausliest und über die geräteseitige Kommunikationsschnittstelle (22) des Telekommunikationsendgeräts (20) an das Gerät (50) weiterleitet.

15. Verfahren nach einem der Ansprüche 1 bis 14, **dadurch gekennzeichnet, dass** das Telekommunikationsendgerät (20) angepasst ist, damit die empfangenen Daten unter Mitwirkung des Sicherheitsmoduls (10) an die Rechnereinheit (60) weitergeleitet werden können.

16. Sicherheitsmodul (10), umfassend einen Speicher (15), zumindest eine Datenschnittstelle (11) zu einem Telekommunikationsendgerät (20) und eine von einem Prozessor (12) des Sicherheitsmoduls (10) ausführbare Steuerapplikation, wobei das Sicherheitsmodul (10) eingerichtet ist, eine Kommunikationsverbindung (80) zu einer Rechnereinheit (60) über ein Datennetz einzurichten, und die Steuerapplikation eingerichtet ist,
- über eine Datenschnittstelle (11) empfangene an eine Rechnereinheit (60) gerichtete Daten eines Geräts (50) in dem Speicher (15) zu speichern und ein Weiterleiten von in dem Speicher (15) gespeicherten Daten über die Datenschnittstelle (11) und die Kommunikationsverbindung (80) zu der Rechnereinheit (60) zu ermöglichen; wobei die Steuerapplikation eingerichtet ist, das Vorliegen einer Information zu prüfen,
und
ein Weiterleiten der in dem Speicher (15) gespeicherten Anfragedaten an die Rechnereinheit (60) zu ermöglichen, falls die Information vorliegt;
**dadurch gekennzeichnet, dass** die Steuerapplikation weiterhin eingerichtet ist
- zu prüfen, ob die Information ein Bereitstellungsnachweis ist, wobei der Bereitstellungsnachweis eine Bereitstellung der Kommunikationsverbindung (80) für das Weiterleiten der Anfragedaten an die Rechnereinheit (60) betrifft und
- der Bereitstellungsnachweis einen Nachweis für eine Kostenübernahme einer Datenübertragung durch das Gerät (50) oder einen beliebigen Dritten umfasst.

17. Sicherheitsmodul (10) nach Anspruch 16 angepasst zur Ausführung eines Verfahrens nach einem der Ansprüche 2 bis 15.

## Claims

1. A method for transmitting data between a device (50) and a computer unit (60) via a data network, with the aid of a telecommunication terminal (20) of a user, said terminal comprising a security module (10) and being able to provide a connection to the computer unit (60) via the data network, having the following steps in the telecommunication terminal (20):
- receiving data of the device (50) directed at the computer unit (60), in the telecommunication terminal (20);
- making possible (310) a forwarding of the received data by the security module (10) via a provided connection (80) between the telecommunication terminal (20) and the computer unit (60); wherein
- the security module (10) checks (300) whether an information item is present, and
- the step of making possible (310) the forwarding of the data received from the device (50) to the computer unit (60) is executed if the information item is present,
**characterized in that**
the information item is a provision confirmation concerning a provision of the communication connection (80) for the forwarding of the data to the computer unit (60), and the provision confirmation is obtained through cost absorption by the device (50) or any desired third party, concerning the forwarding of the data via the communication connection (80) to the computer unit (60).

2. The method according to claim 1, **characterized in that** the computer unit (60) is a server and the user identifies himself for the provided communication connection (80) with the aid of his security module.

3. The method according to claim 2, **characterized in that** upon checking (300) the presence of a provision confirmation, it is checked whether a digital signature for a communication address of the server (60) is present in a memory (15) of the security module (10).

4. The method according to claim 3, **characterized in that** upon checking (300) the presence of a provision confirmation, the digital signature and the match of the signed communication address of the server (60) with a target address of the data to be forwarded are checked.

5. The method according to any of the claims 3 or 4, **characterized in that** the provision confirmation is transmitted from the device (50) to the telecommunication terminal (20).

6. The method according to claim 2, **characterized in that** upon checking (300) the presence of a provision confirmation, it is checked whether in an electronic purse disposed in the memory (15) of the security module (10) there is a provision entry which concerns the communication connection (80) to the server (60) and which is to be associated with the device (50).

7. The method according to claim 2, **characterized in that** upon checking (300) the presence of a provision confirmation, it is checked whether in a memory (15) of the security module (10) an electronic acknowledgment is present which concerns the communication connection (80) to the server (60).

8. The method according to any of the claims 1 to 7, **characterized in that** the costs for the forwarding of the data via the communication connection (80) to the computer unit (60) concern telecommunication costs.

9. The method according to any of the claims 1 to 8, **characterized in that** the security module checks different provision confirmation types.

10. The method according to any of the claims 1 to 9, **characterized in that** the provision confirmation is associated with the computer unit (60).

11. The method according to any of the claims 1 to 10, **characterized in that** the provision confirmation comprises a call number for a telecommunication network, wherein the call number makes possible a data transmission via the telecommunication network into the data network, at least to the computer unit (60), said transmission being free of charge for the user.

12. The method according to claim 11, **characterized in that** the call number makes possible a telecommunication transmission via the telecommunication network that is free of charge for the user, and, in response to the telecommunication transmission, the computer unit (60) sets up the communication connection (80) via the data network for the forwarding of the data.

13. The method according to any of the claims 1 to 12, **characterized in that** the security module stores the received data and provides them for retrieval by the computer unit (60) as a client of a server installed on the security module.

14. The method according to any of the claims 1 to 13, **characterized in that** upon receiving request data of the device (50), a device-side application (A1) receives the request data via a device-side communication interface (22) of the telecommunication terminal (20) and stores them in a memory (15) of the security module (10), and upon the forwarding of response data to the device (50) the device-side application (A1) reads out the response data of the server (60) from the memory (15) of the security module (10) and forwards them to the device (50) via the device-side communication interface (22) of the telecommunication terminal (20).

15. The method according to any of the claims 1 to 14, **characterized in that** the telecommunication terminal (20) is adjusted so that the received data can be forwarded to the computer unit (60) with the cooperation of the security module (10).

16. A security module (10), comprising a memory (15), at least one data interface (11) to a telecommunication terminal (20) and a control application executable by a processor (12) of the security module (10), wherein the security module (10) is adapted to establish a communication connection (80) to a computer unit (60) via a data network, and the control application is adapted
- to store in the memory (15) data of a device (50) received via a data interface (11) that are directed at a computer unit (60), and to make possible a forwarding of data stored in the memory (15) via the data interface (11) and the communication connection (80) to the computer unit (60); wherein the control application is adapted to check the presence of an information item, and
to make possible a forwarding of the request data stored in the memory (15) to the computer unit (60) if the information item is present;
**characterized in that** the control application is further adapted
- to check whether the information item is a provision confirmation, wherein the provision confirmation concerns a provision of the communication connection (80) for the forwarding of the request data to the computer unit (60) and
- the provision confirmation comprises a confirmation for an absorption of costs of a data transmission by the device (50) or any desired third party.

17. The security module (10) according to claim 16, adjusted for executing a method according to any of the claims 2 to 15.

## Revendications

1. Procédé de transmission de données entre un appareil (50) et une unité de calculateur (60) par l'intermédiaire d'un réseau de données à l'aide d'un terminal de télécommunication (20) d'un utilisateur, lequel comprend un module de sécurité (10) et peut mettre à disposition par l'intermédiaire du réseau de données une liaison avec l'unité de calculateur (60), comportant les étapes suivantes dans le terminal de télécommunication (20):
- recevoir, dans le terminal de télécommunication (20), des données de l'appareil (50) adressées à l'unité de calculateur (60);
- permettre (310) un transfert par le module de sécurité (10) des données reçues par l'intermédiaire d'une liaison (80) mise à disposition entre le terminal de télécommunication (20) et l'unité de calculateur (60) ; cependant que
- le module de sécurité (10) examine (300) si une information existe et
- l'étape consistant à permettre (310) le transfert des données reçues de l'appareil (50) à l'unité de calculateur (60) est exécutée si l'information existe
**caractérisé en ce que**
l'information est une indication de mise à disposition qui concerne une mise à disposition de la liaison de communication (80) pour le transfert des données à l'unité de calculateur (60), et **en ce que** l'indication de mise à disposition est obtenue par prise en charge de coûts par l'appareil (50) ou
par un tiers quelconque en ce qui concerne le transfert des données à l'unité de calculateur (60) par l'intermédiaire de la liaison de communication (80).

2. Procédé selon la revendication 1, **caractérisé en ce que** l'unité de calculateur (60) est un serveur et que l'utilisateur s'identifie à l'aide de son module de sécurité pour la liaison de communication (80) mise à disposition.

3. Procédé selon la revendication 2, **caractérisé en ce que**, lors de l'examen (300) de l'existence d'une indication de mise à disposition, il est examiné si, dans une mémoire (15) du module de sécurité (10), il y a une signature numérique pour une adresse de communication du serveur (60).

4. Procédé selon la revendication 3, **caractérisé en ce que**, lors de l'examen (300) de l'existence d'une indication de mise à disposition, la signature numérique et la concordance de l'adresse de communication signée du serveur (60) avec une adresse de destination des données à transférer est examinée.

5. Procédé selon une des revendications 3 ou 4, **caractérisé en ce que** l'indication de mise à disposition est transmise de l'appareil (50) au terminal de télécommunication (20).

6. Procédé selon la revendication 2, **caractérisé en ce que**, lors de l'examen (300) de l'existence d'une indication de mise à disposition, il est examiné si, dans une bourse électronique se trouvant dans une mémoire (15) du module de sécurité (10), il y a un enregistrement de mise à disposition qui concerne une liaison de communication (80) avec le serveur (60) et qui est attribuable à l'appareil (50).

7. Procédé selon la revendication 2, **caractérisé en ce que**, lors de l'examen (300) de l'existence d'une indication de mise à disposition, il est examiné si, dans une mémoire (15) du module de sécurité (10), il y a une quittance électronique concernant la liaison de communication (80) avec le serveur (60).

8. Procédé selon une des revendications de 1 à 7, **caractérisé en ce que** les coûts du transfert des données à l'unité de calculateur (60) par l'intermédiaire de la liaison de communication (80) concernent les coûts de communication.

9. Procédé selon une des revendications de 1 à 8, **caractérisé en ce que** le module de sécurité vérifie différents types d'indications de mise à disposition.

10. Procédé selon une des revendications de 1 à 9, **caractérisé en ce que** l'indication de mise à disposition est attribuée à l'unité de calculateur (60).

11. Procédé selon une des revendications de 1 à 10, **caractérisé en ce que** l'indication de mise à disposition comprend un numéro d'appel pour un réseau de télécommunication, le numéro d'appel permettant une transmission de données gratuite pour l'utilisateur par l'intermédiaire du réseau de
télécommunication dans le réseau de données, au moins vers l'unité de calculateur (60).

12. Procédé selon la revendication 11, **caractérisé en ce que** le numéro d'appel permet une transmission de télécommunication gratuite pour l'utilisateur par l'intermédiaire du réseau de télécommunication et **en ce que** l'unité de calculateur (60), en réponse à la transmission de télécommunication, établit la liaison de communication (80) par l'intermédiaire du réseau de
données pour le transfert des données.

13. Procédé selon une des revendications de 1 à 12, **caractérisé en ce que** le module de sécurité mémorise les données reçues et les met à disposition pour le prélèvement par l'unité de calculateur (60) en tant que client d'un serveur installé sur le module de sécurité.

14. Procédé selon une des revendications de 1 à 13, **caractérisé en ce que**, lors de la réception de données d'interrogation de l'appareil (50), une application (A1) côté appareil reçoit les données d'interrogation par l'intermédiaire d'une interface de communication (22), côté appareil, du terminal de télécommunication (20) et les mémorise dans une mémoire (15) du module de sécurité (10), et **en ce que**, lors du transfert des données de réponse à l'appareil (50), l'application (A1) côté appareil lit les données de réponse du serveur (60) à partir de la mémoire (15) du module de sécurité (10) et les transfère par l'intermédiaire de l'interface de communication (22), côté appareil, du terminal de télécommunication (20), à l'appareil (50).

15. Procédé selon une des revendications de 1 à 14, **caractérisé en ce que** le terminal de télécommunication (20) est adapté à ce que les données reçues puissent être transférées à l'unité de calculateur (60) avec le concours du module de sécurité (10).

16. Module de sécurité (10), comprenant une mémoire (15), au moins une interface de données (11) vers un terminal de télécommunication (20) et une application de commande exécutable par un processeur (12) du module de sécurité (10), le module de sécurité (10) étant configuré pour configurer une liaison de communication (80) avec une unité de calculateur (60) par l'intermédiaire d'un réseau de données, et l'application de commande étant configurée pour
- mémoriser dans la mémoire (15) des données d'un appareil (50) reçues par l'intermédiaire d'une interface de données (11) et adressées à une unité de calculateur (60) et pour permettre un transfert de données mémorisées dans la mémoire (15) par l'intermédiaire de l'interface de données (11) et de la liaison de communication (80) vers l'unité de calculateur (60); l'application de commande étant configurée pour examiner l'existence d'une information,
et
permettre un transfert des données d'interrogation mémorisées dans la mémoire (15) vers l'unité de calculateur (60) si l'information existe;
**caractérisé en ce que** l'application de commande est en outre configurée
- pour examiner si l'information est une indication de mise à disposition, l'indication de mise à disposition concernant une mise à disposition de la liaison de communication (80) pour le transfert des données d'interrogation vers l'unité de calculateur (60), et
- l'indication de mise à disposition comprenant une indication pour une prise en charge de coûts d'une transmission de données par l'appareil (50) ou par un tiers quelconque.

17. Module de sécurité (10) selon la revendication 16, adapté à l'exécution d'un procédé selon une des revendications de 2 à 15.
